# EUROPEAN PATENT SPECIFICATION

(11) **EP 4 145 419 B1**
(45) Date of publication and mention of the grant of the patent: **17.04.2024**
(21) Application number: 22193326.0
(22) Date of filing: 31.08.2022
(51) Int. Cl.: G08G 1/01, G08G 1/00, G08G 1/0968, G08G 1/16

(54) **CROWD-SOURCED CONTINUOUS UPDATE DATA COLLECTION FOR AUTOMOTIVE APPLICATIONS**
CROWD-GESOURCTE KONTINUIERLICHE AKTUALISIERUNGSDATENSAMMLUNG FÜR AUTOMOBILANWENDUNGEN
COLLECTE DE DONNÉES DE MISE À JOUR CONTINUE PAR EXTERNALISATION OUVERTE POUR APPLICATIONS AUTOMOBILES

(30) Priority: 02.09.2021 US 202163240248 P; 30.08.2022 US 202217823206
(43) Date of publication of application: 08.03.2023
(73) Proprietor: Aptiv Technologies Limited, St. Michael (BB)
(72) Inventor: KRUTSCH, Robert, Dusseldorf (DE); SEARCY, James, Westfield (US)
(74) Representative: Gaunt, Thomas Derrick

(56) References cited:
- US-A1- 2021 101 619
- US-B1- 10 203 699

## Description

### TECHNICAL FIELD

The present disclosure concerns a system for collecting training data from a vehicle fleet. The present disclosure is particularly relevant to data collection techniques for enabling machine-learning-based application updates and releases across vehicle fleets.

### BACKGROUND

Advanced Driver Assistance Systems (ADAS) and Automated Driving (AD) systems provide driving functions and other operations to improve the safety of vehicles. These systems often implement machine-learned models to quickly process input data and provide the desired function. Machine-learned models, however, must be trained using relevant data. This data is often collected as part of a collection campaign for each release or update of an ADAS or AD application, which may regularly update the models to improve performance and/or safety. Such collection campaigns are generally unscalable and inefficient, especially for a multitude of ADAS or AD applications, at continuously improving machine-learned models.

US 2021/101619 A1 discloses techniques for implementing behavioral modeling to apply culturally sensitive behavioral tuning to driving policies implemented by autonomous vehicles. US 10 203 699 B1 discloses technologies for selectively remotely controlling advanced driver-assistance vehicle systems.

### SUMMARY

This document describes techniques and systems for crowd-sourced continuous update data collection for automotive applications. Each vehicle of a vehicle fleet may include a logging system, a data query daemon, and a user application. The logging system logs application metadata or sensor data for a host vehicle. The data query daemon receives data queries from a remote data query system and detects the requested data in the application metadata and/or the sensor data being logged. The user application provides information related to the data query to the vehicle user and requests permission to execute the data query. In this way, application providers for ADAS and AD systems may collect relevant data from an existing vehicle fleet to develop updated or new applications without incurring the recurring cost of expensive data collection campaigns.

This document also describes methods performed by the above-summarized system and other configurations of the disclosed system set forth herein and means for performing these methods.

The description provides exemplified embodiments related to systems and methods for updating crowd-sourced data collection, which may be used in automotive applications. The exemplary embodiments are not intended to identify essential features of the claimed subject matter, nor restrict the scope of the claimed subject matter.

### BRIEF DESCRIPTION OF THE DRAWINGS

Exemplified embodiments of crowd-sourced continuous update data collection for automotive applications are described in this document with reference to the following figures. The same reference numbers may be used throughout the drawings to reference like features and components:
FIG. 1 illustrates an exemplified embodiment of crowd-sourced continuous update data collection for automotive applications in accordance with techniques of this disclosure;
FIG. 2 illustrates an exemplified architecture diagram in which crowd-sourced continuous update data collection may be employed for automotive applications in accordance with techniques of this disclosure;
FIG. 3 illustrates an exemplified diagram of an ADAS domain controller that may execute data queries for crowd-sourced continuous update data collection; and
FIG. 4 illustrates an exemplified method for executing data queries in crowd-sourced continuous update data collection in accordance with techniques of this disclosure.

### DETAILED DESCRIPTION

As described above, many vehicle applications implement machine-learned models to process input data (e.g., sensor data) to provide a safety function (e.g., automatic emergency braking, pedestrian detection, parking assist, driver drowsiness detection, gaze detection). In general, machine-learned models enable ADAS or other applications to find patterns or make decisions based on input data. Machine-learned models are developed and optimized using a training dataset. Training datasets are often collected as part of a tailored collection campaign for each release or update of the application or components, which rely on the model. Individual collection campaigns are usually unscalable across multiple applications and may be greatly inefficient for enabling continuous updates of a given application.

In contrast, the techniques and systems described herein enable crowd-sourced continuous update data collection for automotive applications that is both scalable and efficient. For example, each host vehicle includes a logging system, a data query daemon, and a user application. The logging system logs application metadata or sensor data associated with one or more applications of a host vehicle. The data query daemon receives a data query from a remote computer system. The data query includes a request for data that satisfies one or more conditions. The remote computer system may cause the data query to be directed to a vehicle fleet that includes the host vehicle. In response to receiving the data query, the data query daemon detects the requested data in the application metadata or sensor data being logged and stores it in memory. The requested data is then transmitted to the remote computer system. The user application may present information related to the data query or request permission from a user of the host vehicle to respond to the data query. In this way, ADAS application providers may collect relevant training datasets from an existing vehicle fleet for the development of updated or new applications without incurring the recurring cost of expensive data collection campaigns.

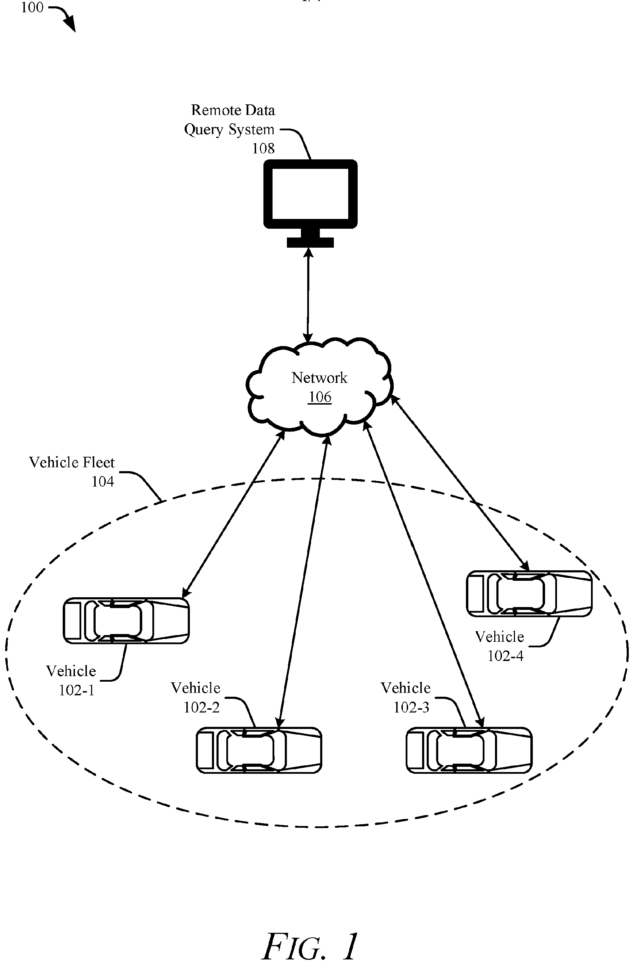

FIG. 1 illustrates an exemplified embodiment 100 to employ crowd-sourced continuous update data collection for automotive applications in accordance with techniques of this disclosure. The embodiment 100 illustrates example components to gather training datasets for the machine-learned models of new or updated applications. The embodiment 100 may include multiple vehicles 102 (e.g., vehicle 102-1, 102-2, 102-3, 102-4) that collectively form a vehicle fleet 104. The vehicles 102 are communicatively coupled to a remote data query system 108 via a network 106 (e.g., the internet).

Although illustrated as a car, the vehicles 102 may represent other types of motorized vehicles (e.g., an automobile, a motorcycle, a bus, a tractor, a semi-trailer truck), non-motorized vehicles (e.g., a bicycle), railed vehicles (e.g., a train), watercraft (e.g., a boat), aircraft (e.g., an airplane), or spacecraft (e.g., satellite). In general, application developers may collect application metadata or sensor data from any moving platform, including moving machinery or robotic equipment. Application developers may include a fixed set of vehicles 102 in the vehicle fleet 104 or a dynamic set of vehicles 102 that is adapted to particular data collection needs.

The vehicles 102 include communication devices (e.g., radio frequency (RF) transceivers to transmit and receive RF signals) to communicate via the network 106 with the remote data query system 108. The transceivers may include one or more transmitters and receivers incorporated together on the same integrated circuit (e.g., a transceiver integrated circuit) or separately on different integrated circuits. The communication devices are used to communicate with one or more remote computing devices (e.g., a server or computing system) providing the remote data query system 108. For example, the vehicle 102-1 uses the communication devices to wirelessly exchange (e.g., over cellular communication or wireless local area networks (WLANs)) requested data with the remote data query system 108. Similarly, the vehicle 102-1 uses the communication devices to wirelessly receive data queries from the remote data query system 108.

The remote data query system 108 is located at a computer system or a distributed computer system remote from the vehicle fleet 104. In operation, an application team posts data queries for training data via the data query application 108 to the vehicle fleet 104. The data query is communicated from the remote data query system 108 to the vehicles 102 of the vehicle fleet 104 via the network 106. In response, the vehicles 102 provide the requested application metadata or sensor data.

The data queries may be similar to a SELECT operation with given conditions on the application metadata or sensor data. The data queries may also include a background application that runs in the background on the vehicle 102. In other implementations, the data queries identify a particular location from where application metadata or sensor data is desired (e.g., a tunnel in which a lane keeping assist system is providing problematic results).

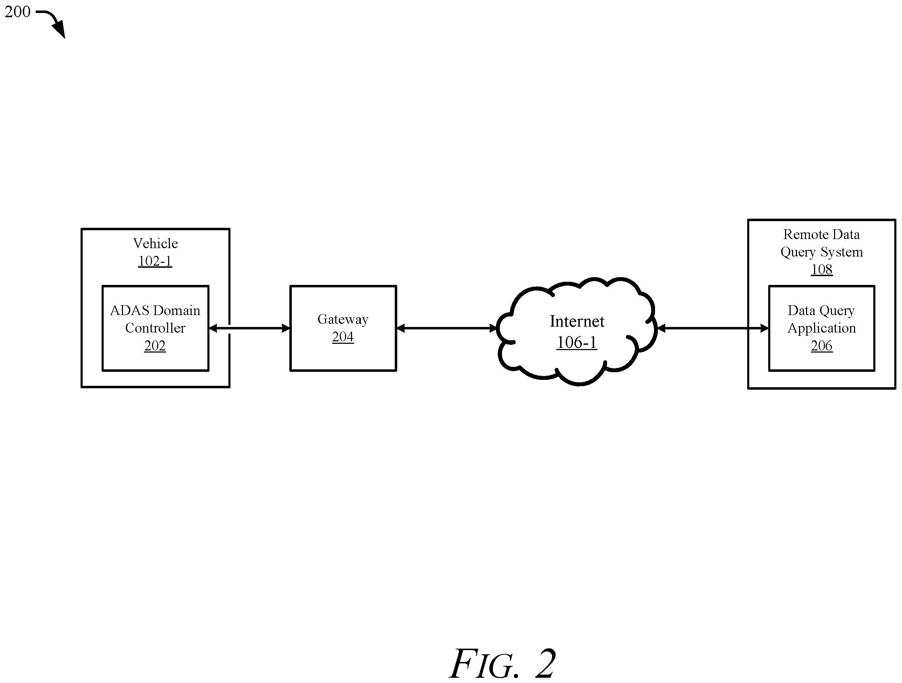

FIG. 2 illustrates an exemplified architecture diagram 200 in which crowd-sourced continuous update data collection is employed for automotive applications in accordance with techniques of this disclosure. The architecture diagram includes the vehicle 102-1 and the remote data query system 108 of FIG. 1 that are operatively connected via the internet 106-1, which is one example of the network 106. In other implementations, the network 106 may be a private or public computer network.

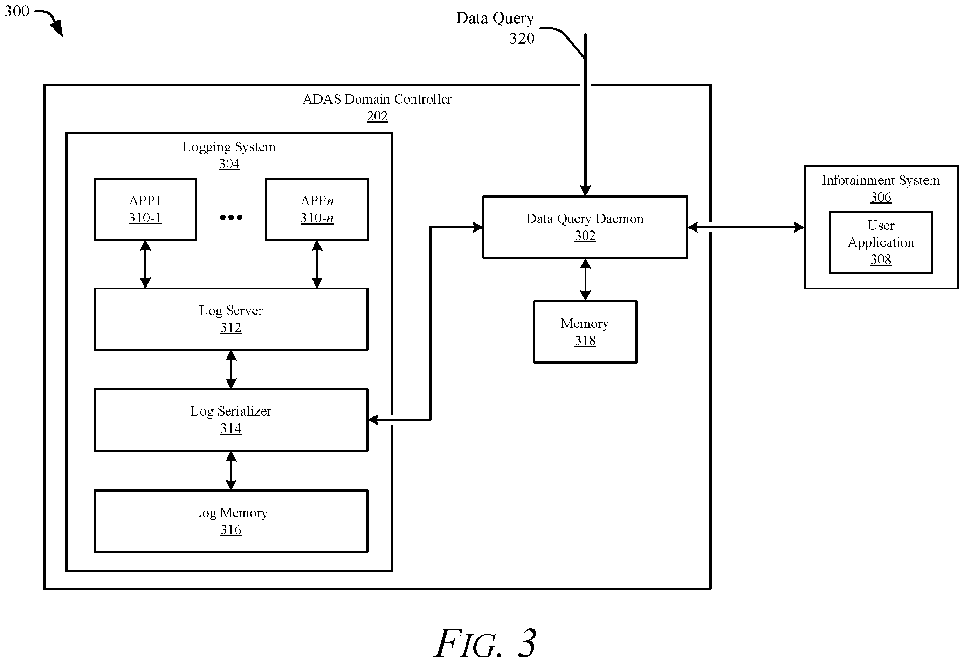

The vehicle 102-1 includes an ADAS domain controller 202, which is operatively connected to a gateway 204. As described in greater below with respect to FIG. 3, the ADAS domain controller 202 includes one or more ADAS application that provide particular features or functionalities (e.g., lane keeping assist, automatic cruise control). The ADAS domain controller 202 receives and executes the data query.

The vehicle 102-1 may include one or more processors (e.g., application processors, microprocessors, digital signal processors (DSP), or controllers) that are configured to execute computer-executable instructions stored within computer-readable storage media (e.g., non-transitory storage devices such as hard drives, solid state drives (SSD), flash memories, read-only memories (ROM), erasable programmable ROM (EPROM), or electrically erasable programmable ROM (EEPROM)) to cause the ADAS domain controller 202 to perform the techniques described herein. The instructions may be part of operating systems and/or one or more applications of the vehicle 102-1 or the ADAS domain controller 202.

The gateway 204 operatively connects the ADAS domain controller 202 or the vehicle 102-1 to the remote data query system 108 via the internet 106-1 or another private or public computer network. The gateway 204 is a device or node connecting the ADAS domain controller 202 to the internet 106-1. For example, the gateway 204 may be networking hardware, software, or a combination thereof that converts the data query (from the remote data query system 108) and requested data (from the ADAS domain controller 202) from one protocol or format to another. In one example, the gateway 204 is a router or switch associated with a wireless LAN (e.g., at the driver's home).

The remote data query system 108 includes a data query application 206. The data query application 206 is configured to receive input from a user (e.g., an application engineer), from which the data query application 206 generates and posts data queries to the vehicle fleet 104. The data query application 206 allows the user to indicate one or more conditions associated with each data query. For example, the data query selects or identifies a particular application (e.g., lane keeping assist) from which to gather application metadata or sensor data from the vehicle fleet 104. The data query also identifies the application metadata or sensor data to be gathered, or a geographical situation from which to gather it. Similarly, the data query application 206 allows the user to identify scenarios for the data collection (e.g., an interruption in lane markers on a highway).

In operation, an application engineer or machine-learning team of users identifies a training dataset with one or more conditions that is needed (e.g., to train a machine-learning model). The machine-learning team posts a data query in the data query application 206. The remote data query system 108 transmits the data query via the internet 106-1 and various gateways 204 to the vehicle fleet 104, including the vehicle 102-1. The ADAS domain controller 202 executes the data query and transmits the requested data to the data query application 206. The requested data is then used by the machine-learning team to train or validate the machine-learning model and/or application.

FIG. 3 illustrates an exemplified diagram 300 of the ADAS domain controller 202 that executes data queries for crowd-sourced continuous update data collection. The ADAS domain controller 202 includes a data query daemon 302 and a logging system 304. The ADAS domain controller 202 or the data query daemon 302 is operatively connected to an operator or user control system, such as an infotainment system 306 (e.g., a console screen) of the vehicle (e.g., the vehicle 102-1).

The data query daemon 302 is configured to execute a data query 320 received from the data query application 206 by detecting requested data. The data query daemon 302 is also operatively connected to the logging system 304, in particular a log serializer 314 of the logging system 304. Upon extracting the requested data from the logging system 304, the data query daemon 302 stores or buffers the requested data in a memory 318 until a connection is initiated with the remote data query system 108. The requested data is maintained in the memory 318 as long as sufficient storage is available in the memory 318 or the ADAS domain controller 202 connects with the remote data query system 108 via the gateway 204 and transmits the requested data.

The logging system 304 may store application metadata and sensor data for one or more applications 310 (e.g., a first application (APP1) 310-1 and an n-th application (APPn) 310-n). As described above, the applications 310 may include various ADAS and AD functions, such as lane keeping assist, adaptive cruise control, and pedestrian detection. The logging system 304 also includes a log server 312, a log serializer 314, and a log memory 316. The log server 312 is operatively connected to the applications 310 and may aggregate the application metadata and sensor data associated with the applications 310. The log serializer 314 is operatively connected to the log server 314 (and the data query daemon 302) and serializes the aggregated application metadata and sensor data for storage in the log memory 316. The log memory 316 is operatively connected to the log serializer 314 and stores the serialized application metadata and serialized sensor data. Each application 310 may continuously store a set of signals in the log memory 316, which may have the form of APP<i>.Signal<j>. The data query 320 may similarly be considered a SELECT query in a database (e.g., SELECT DATA for APP<1>. Signal<1> ! =APP<3>. Signal<4>).

In other implementations, upon the conditions of the data query being satisfied, the data query daemon 302 or the logging system 304 stores or buffers the requested data in the log memory 316 until a connection is initiated with the remote data query system 108. In such implementations, the requested data may be stored in a circular buffer of the log memory 316. This circular buffer of the log memory 316 may be the same or a secondary circular buffer in which the serialized application metadata and sensor data is stored. The requested data is maintained in the log memory 316 as long as sufficient storage is available in the circular buffer or the ADAS domain controller 202 connects with the remote data query system 108 via the gateway 204 and transmits the requested data. In yet other implementations, the logging system 304 only stores application metadata or sensor data that satisfies the conditions of a data query 320 in the circular buffer of the log memory 316 (e.g., the conditions of the data query 320 act as the mechanism for the logging system 304 to store application metadata or sensor data in the log memory 316).

In some implementations, the data query 320 may execute a background application that performs computations on the data being logged by the logging system 304 and determine if the data or the results of the background application are to be saved in the memory 318. For example, the background application implements a new version of the first application 310-1 and compares its results to the results of the first application 310-1. If the results are not within a predetermined threshold, the data query daemon stores the input data and the results of the background application and the first application 310-1.

The infotainment system 306 may include a user application 308. The user application 308 is operatively connected to the data query daemon 302 and requests permission from the user of the host vehicle 102-1 to execute the data query 320. The permission may be obtained generally for future data queries. In other implementations, the permission is obtained for each data query 320. Upon receiving a data query 320, the data query daemon 302 may provide information associated with the data query 320 to the user application 308. The user application 308 then displays information (e.g., location or driving scenario for the requested data) associated with the data query 320 to the user. The user application 320 may also present a reward (e.g., money, free updates to a map database or other features, additional non-safety features) for completing the data query 320 and receive acceptance or permission from the user for the data query daemon 302 to execute the data query 320. In another implementation, the location or scenarios associated with the data query 320 are provided to a navigation program of the vehicle 102-1 so that future navigation routes may address that location or scenario. Similarly, the user may adjust setting in the navigation program to select the priority to be given to satisfying desired locations or scenarios of a data query 320 through the selection of potential navigation routes. The prioritization of navigation routes may also consider whether additional requested data may be stored in the memory 318, which may utilize compression techniques to increase the storage amount for requested data.

The data query daemon 302 may also receive a request to cancel a previous data query 320 from the data query application 206. In response to the cancel request, the data query daemon 302 ceases collecting the requested data from the logging system 304 (e.g., deleting or removing a collection filter associated with the data query 320). The data query daemon 302 also transmits an acknowledgment to the data query application 206 of the query cancellation.

In other implementations, the data query daemon 302 receives a request to modify one or more conditions of a previous data query. The data query daemon 302 transmits an acknowledgment to the data query application 206 of the modified data query. The data query daemon 302 also modifies the collection of the application metadata and sensor data (e.g., by modifying the filter to collect the requested data from the log serializer 314).

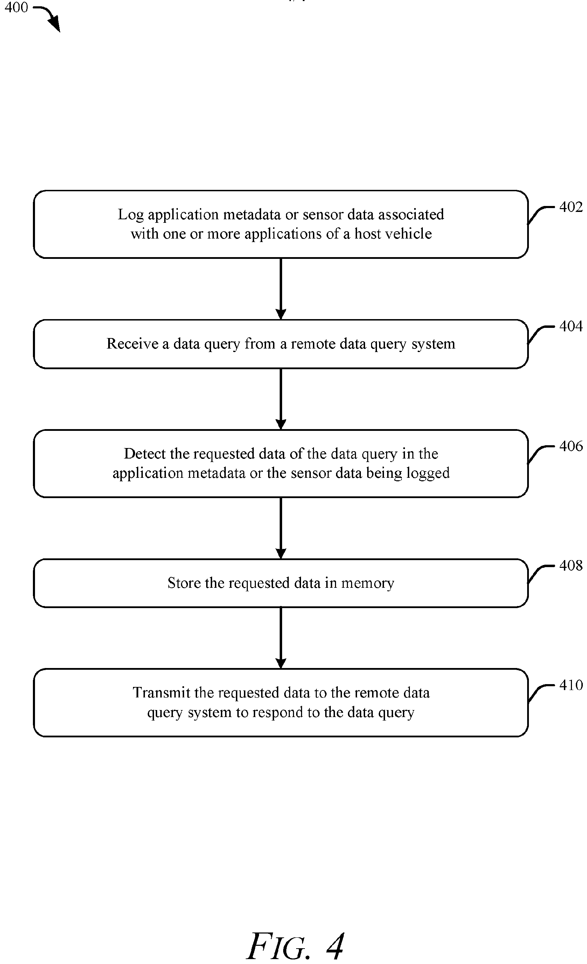

FIG. 4 illustrates an exemplified method 400 for executing data queries in crowd-sourced continuous update data collection in accordance with techniques of this disclosure. Method 400 is shown as sets of operations (or acts) performed, but not necessarily limited to the order or combinations in which the operations are shown herein. Further, any one or more of the operations may be repeated, combined, or reorganized to provide other methods.

At 402, a logging system operatively connected to one or more application of a host vehicle logs application metadata or sensor data associated with the one or more applications. For example, the logging system 304 logs application metadata or sensor data associated with the applications 310 (e.g., the first application 310-1). The logging system 304 (or at least components thereof) is operatively connected to the applications 310.

The logging system 304 may include the log server 312, the log serializer 314, and the log memory 316. The log server 312 is operatively connected to the applications 310 and aggregates the application metadata or sensor data associated with the applications 312. The log serializer 314 is operatively connected to the log server 312 and the data query daemon 302. The log serializer 314 serializes the aggregated application metadata or the aggregated sensor data. The log memory 316 is operatively connected to the log serializer 314 and stores the serialized application metadata or serialized sensor data. The log memory 316 may store the serialized application metadata or serialized sensor data in a circular buffer.

At 404, a data query daemon is operatively connected to the logging system and receives a data query from a remote data query system. The data query includes a request for data satisfying one or more conditions and being directed to a vehicle fleet that includes the host vehicle. For example, the data query daemon 302 is operatively connected to the logging system 304. The data query daemon 302 receives data queries 320 from a remote data query system 108 via the internet 106-1 or another network 106. The remote data query system 108 includes the remote data query application 206, which is executed by a remote computer system. The vehicle 102-1 may also include a processor that executes the data query daemon 302 to respond to the data queries 320 when the vehicle 102-1 is operating in a travel lane on a roadway.

In response to receiving the data query 320, the data query daemon 302 transmits an acknowledgment to the remote data query system 108. The acknowledgment may include an estimated date or time of completion of the data query 320. For example, the data query daemon 302 determines the estimated completion time based on a user's driving history, current location, expected location (e.g., based on calendar entries), the user's driving habits, or geographical considerations.

If multiple data queries 320 are received, the remote data query system 108 may indicate a prioritization for the multiple data queries 320. In other implementations, the data query daemon 302 determines the prioritization for executing each data query 320 based on available memory in the memory 318, the user's driving history, current location of the vehicle 102-1, expected location (e.g., based on calendar entries), the user's driving habits, or geographical considerations. In yet other implementations, the data query daemon 302 generates filters associated with each data query 320 and executes a data query 320 as the requested data is detected at the log serializer 314.

The data queries 320 are directed to a vehicle fleet 104, which includes the vehicle 102-1, and include a request for data (among the sensor data and application metadata associated with one or more of the applications 310) that satisfies one or more conditions. The conditions may include a driving scenario, a location, or a source application. Each data query 320 may be sent to the same vehicle fleet 104 or a different vehicle fleet.

The data query 320 may include a background application that performs computations using the requested data and stores the computations and the requested data if the performance conditions of the background application are not satisfied. The background application may be a new or updated version of the first application 310-1 or another application 310. The performance conditions may include a comparison between an output of the first application 310-1 and an output of the new or updated version of the first application 310-1.

The vehicle 102-1 may also include the user application 308 operatively connected to the data query daemon 302. The user application 308 requests permission from a user of the vehicle 102-1 for the data query daemon 302 to store and transmit the requested data. The user may provide permission in advance for future data queries 320. The user application 308 may also display information (e.g., on the infotainment system 306) related to the data query 320 to the user. The displayed information may include a location or a driving scenario associated with the data query 320. The user application 308 may also display a reward for completion of the data query 320 and receive an input from the user providing permission to complete the data query 320. The reward may include a monetary amount, a reduced or eliminated fee for a feature, or an update for a map database or another feature. In other implementations, the user application 308 displays information related to multiple data queries 320 and receives user input providing permission to complete one or more of the multiple data queries 320. The user application 308 may also pass the conditions of the data query 320 to a navigation system that may select a route that satisfies the conditions among one or more available routes.

At 406, the data query daemon detects the requested data of the data query in the application metadata or the sensor data being logged by the logging system. For example, the data query daemon 302 detects (e.g., using a filter) the requested data of the data query 320 in the application metadata or the sensor data being serialized by the log serializer 314. The data query daemon 302 may detect the requested data by constructing a filter based on the requested data, monitoring the aggregated application metadata or the aggregated sensor data, and extracting, using the filter, the requested data from the aggregated metadata or the aggregated sensor data.

At 408, the data query daemon stores the requested data in memory. For example, the data query daemon 302 stores the requested data extracted from the logging system 304 in the memory 318. The memory 318 is separate from the circular buffer or log memory 316 of the logging system 304. In other implementations, the data query daemon 302 or the logging system 304 stores the requested data in the circular buffer or a secondary circular buffer of the log memory 316.

At 410, the data query daemon transmits the requested data to the remote data query system to respond to the data query. For example, in response to the data query 320, the data query daemon 302 transmits the requested data to the remote data query system 108. The data query daemon 320 may transmit the requested data to the remote data query system 108 upon the vehicle 102-1 connecting to a wireless local area network via the gateway 204.

### ADDITIONAL EXEMPLIFIED EMBODIMENTS

Some additional exemplified embodiments for crowd-sourced continuous update data collection for automotive applications are provided below.

Example 1: A system of a host vehicle comprising: a logging system operatively connected to one or more applications of the host vehicle and configured to log application metadata or sensor data associated with the one or more applications; a data query daemon operatively connected to the logging system and configured to: receive a data query from a remote data query system, the data query comprising a request for data satisfying one or more conditions and being directed to a vehicle fleet that includes the host vehicle; detect the requested data of the data query in the application metadata or the sensor data being logged by the logging system; extract and store the requested data in memory; and transmit the requested data to the remote data query system to respond to the data query.

Example 2: The system of example 1, wherein the logging system comprises: a log server operatively connected to the one or more applications and configured to aggregate the application metadata or the sensor data associated with the one or more applications; a log serializer operatively connected to the log server and the data query daemon, the log serializer configured to serialize the aggregated application metadata or the aggregated sensor data; and a log memory operatively connected to the log serializer and configured to store the serialized application metadata or the serialized sensor data.

Example 3: The system of example 2, wherein the data query daemon is configured to detect the requested data of the data query in the application metadata or the sensor data being logged by the logging system by: constructing a filter based on the requested data; monitor the aggregated application metadata or the aggregated sensor data; and extract, using the filter, the requested data from the aggregated application metadata or the aggregated sensor data.

Example 4: The system of example 2 or 3, wherein the log memory is further configured to store the serialized application metadata or the serialized sensor data in a circular buffer.

Example 5: The system of example 4, wherein the memory in which the requested data is stored is separate from the circular buffer of the logging system.

Example 6: The system of example 4, wherein the memory in which the requested data is stored is the circular buffer or a secondary circular buffer of the logging system.

Example 7: The system of any one of the preceding examples, wherein the one or more conditions include at least one of a driving scenario, a location, or a source application.

Example 8: The system of any one of the preceding examples, wherein the data query includes a background application configured to: perform computations using the requested data; and store the computations and the requested data if performance conditions of the background application are not satisfied.

Example 9: The system of example 8, wherein: the background application comprises a new or updated version of a first application of the one or more applications; and the performance conditions comprise a comparison between an output of the first application and an output of the new or updated version of the first application.

Example 10: The system of any one of the preceding examples, wherein the data query daemon is further configured to receive a second data query from the remote data query system, the second data query comprising a second request for data satisfying one or more additional conditions and being directed to a second vehicle fleet that includes the host vehicle, the second vehicle fleet being different than the vehicle fleet.

Example 11: The system of any one of the preceding examples, wherein the data query daemon is further configured to transmit the requested data to the remote data query system upon the host vehicle connecting to a wireless local area network.

Example 12: The system of any one of the preceding examples, wherein the system further comprises a user application operatively connected to the data query daemon and configured to request permission from a user of the host vehicle for the data query daemon to store and transmit the requested data.

Example 13: The system of example 12, wherein the permission is provided in advance for multiple data queries.

Example 14: The system of example 12, wherein the user application is further configured to: display information related to the data query to the user including at least one of a location or a driving scenario associated with the data query; display a reward for completion of the data query to the user; and receive an input from the user providing permission to complete the data query.

Example 15: The system of example 14, wherein the reward comprises at least one of a monetary amount, a reduced or eliminated fee for one or more features, or an update for a map database or the one or more features.

Example 16: The system of example 14 or 15, wherein the user application is further configured to: display information related to multiple data queries; and receive an input from the user providing permission to complete one or more of the multiple data queries.

Example 17: The system of any one of examples 14 through 16, wherein the user application is further configured to pass the one or more conditions of the data query to a navigation system of the host vehicle, the navigation system being configured to select a route that satisfies the one or more conditions among one or more available routes.

Example 18: The system of any one of the preceding examples, wherein the remote data query system comprises a remote data query application executed by a remote computer system.

Example 19: The system of any one of the preceding examples, the system further comprising a processor configured to execute the data query daemon to respond to the data query when the host vehicle is operating in a travel lane on a roadway.

Example 20: A method comprising: logging, by a logging system operatively connected to one or more application of a host vehicle, application metadata or sensor data associated with the one or more applications; receiving, by a data query daemon operatively connected to the logging system, a data query from a remote data query system, the data query comprising a request for data satisfying one or more conditions and being directed to a vehicle fleet that includes the host vehicle; detecting, by the data query daemon, the requested data of the data query in the application metadata or the sensor data being logged by the logging system; extracting and storing, by the data query daemon, the requested data in memory; and transmitting, by the data query daemon, the requested data to the remote data query system to respond to the data query.

Example 21: A computer-readable storage media comprising computer-executable instructions that, when executed, cause a processor of a host vehicle to perform the method of example 20.

### CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the scope of the disclosure as defined by the following claims. Problems associated with data collection may occur in other systems. Therefore, although described as a way to collect data from a vehicle fleet, the techniques of the foregoing description may be applied to other systems that would benefit from crowd-sourced continuous update data collection.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

## Claims

1. A system of a host vehicle comprising:
a logging system (304) operatively connected to one or more applications (310) of the host vehicle (102-1) and configured to log application metadata or sensor data associated with the one or more applications (310);
a data query daemon (302) operatively connected to the logging system (304) and configured to:
receive a data query (320) from a remote data query system (108), the data query (320) comprising a request for data satisfying one or more conditions and being directed to a vehicle fleet (104) that includes the host vehicle (102-1);
detect the requested data of the data query (320) in the application metadata or the sensor data being logged by the logging system (304);
extract and store the requested data in memory (318); and
transmit the requested data to the remote data query system (108) to respond to the data query (320).

2. The system of claim 1, wherein the logging system (304) comprises:
a log server (312) operatively connected to the one or more applications (310) and configured to aggregate the application metadata or the sensor data associated with the one or more applications (310);
a log serializer (314) operatively connected to the log server (312) and the data query daemon (302), the log serializer (314) configured to serialize the aggregated application metadata or the aggregated sensor data; and
a log memory (316) operatively connected to the log serializer (314) and configured to store the serialized application metadata or the serialized sensor data.

3. The system of claim 2, wherein the data query daemon (302) is configured to detect the requested data of the data query (320) in the application metadata or the sensor data being logged by the logging system (304) by:
constructing a filter based on the requested data;
monitor the aggregated application metadata or the aggregated sensor data; and
extract, using the filter, the requested data from the aggregated application metadata or the aggregated sensor data.

4. The system of claim 2 or 3, wherein:
the log memory (316) is further configured to store the serialized application metadata or the serialized sensor data in a circular buffer; and
the memory (318) in which the requested data is stored is separate from the circular buffer of the logging system (304).

5. The system of claim 2 or 3, wherein:
the log memory (316) is further configured to store the serialized application metadata or the serialized sensor data in a circular buffer; and
the memory (318) in which the requested data is stored is the circular buffer or a secondary circular buffer of the logging system (304).

6. The system of any one of the preceding claims, wherein the one or more conditions include at least one of a driving scenario, a location, or a source application.

7. The system of any one of the preceding claims, wherein the data query (320) includes a background application that is a new or updated version of a first application (310-1) of the one or more applications (310), the background application is configured to:
perform computations using the requested data; and
store the computations and the requested data if performance conditions of the background application are not satisfied, the performance conditions comprising a comparison between an output of the first application and an output of the new or updated version of the first application (310-1).

8. The system of any one of the preceding claims, wherein the data query daemon (302) is further configured to receive a second data query from the remote data query system (108), the second data query comprising a second request for data satisfying one or more additional conditions and being directed to a second vehicle fleet that includes the host vehicle, the second vehicle fleet being different than the vehicle fleet (104).

9. The system of any one of the preceding claims, wherein the data query daemon (302) is further configured to transmit the requested data to the remote data query system (108) upon the host vehicle (102-1) connecting to a wireless local area network.

10. The system of any one of the preceding claims, wherein the system further comprises a user application (308) operatively connected to the data query daemon (302) and configured to request permission from a user of the host vehicle (102-1) for the data query daemon (302) to store and transmit the requested data.

11. The system of claim 10, wherein the user application (308) is further configured to:
display information related to the data query (320) to the user including at least one of a location or a driving scenario associated with the data query (320);
display a reward for completion of the data query (320) to the user, the reward including at least one of a monetary amount, a reduced or eliminated fee for one or more features, or an update for a map database or the one or more features; and
receive an input from the user providing permission to complete the data query (320).

12. The system of claim 10 or 11, wherein the user application (308) is further configured to:
display information related to multiple data queries (320); and
receive an input from the user providing permission to complete one or more of the multiple data queries (320).

13. The system of any one of claims 10 through 12, wherein the user application (308) is further configured to pass the one or more conditions of the data query (320) to a navigation system of the host vehicle, the navigation system being configured to select a route that satisfies the one or more conditions among one or more available routes.

14. The system of any one of the preceding claims, wherein the remote data query system (108) comprises a remote data query application (206) executed by a remote computer system.

15. The system of any one of the preceding claims, wherein the system further comprises a processor configured to execute the data query daemon (302) to respond to the data query (320) when the host vehicle (102-1) is operating in a travel lane on a roadway.

## Patentansprüche

1. System eines Hostfahrzeugs umfassend:
Ein Protokolliersystem (304), das betriebsbereit mit einer oder mehreren Anwendungen (310) des Hostfahrzeugs (102-1) verbunden und konfiguriert ist, Anwendungs-Metadaten oder Sensordaten zu protokollieren, die mit der einen oder den mehreren Anwendungen (310) verbunden sind;
Ein Datenabfrage-Daemon (302), der betriebsbereit mit dem Protokolliersystem (304) verbunden und für Folgendes konfiguriert ist:
Empfangen von Datenabfragen (320) von einem Remote-Datenabfragesystem (108), die Datenabfrage (320) umfasst dabei eine Anforderung von Daten, die eine oder mehrere Bedingungen erfüllen und an eine Fahrzeugflotte (104) gerichtet sind, die das Hostfahrzeug (102-1) beinhaltet;
Erfassen von angeforderten Daten der Datenabfrage (320) in den Anwendungs-Metadaten oder der Sensordaten, die durch das Protokolliersystem (304) aufgezeichnet werden;
Extrahieren und speichern der angeforderten Daten im Speicher (318); und
Übermitteln der angeforderten Daten an das Remote-Datenabfragesystem (108), um die Datenabfrage zu beantworten (320).

2. System nach Anspruch 1, wobei das Protokolliersystem (304) Folgendes umfasst:
Einen Protokollierungsserver (312), der betriebsbereit mit einer oder mehreren Anwendungen (310) verbunden und konfiguriert ist, Anwendungs-Metadaten oder die Sensordaten zu aggregieren, die mit der einen oder den mehreren Anwendungen (310) verbunden sind;
einen Protokollserialisierer (314), der betriebsbereit mit dem Protokollierungsserver (312) und dem Datenabfrage-Daemon (302) verbunden ist, der Protokollserialisierer (314) ist dabei so konfiguriert, dass er die aggregierten Anwendungs-Metadaten oder die aggregierten Sensordaten serialisiert; und
einen Protokollspeicher (316), der betriebsbereit mit dem Protokollserialisierer (314) verbunden und konfiguriert ist, die serialisierten Anwendungs-Metadaten oder die serialisierten Sensordaten zu speichern.

3. System nach Anspruch 2, wobei der Datenabfrage-Daemon (302) konfiguriert ist, die angeforderten Daten der Datenabfrage (320) in den Anwendungs-Metadaten oder die Sensordaten, die vom Protokolliersystem (304) aufgezeichnet wurden, durch Folgendes zu erfassen:
Erstellen eines Filters, basierend auf den angeforderten Daten;
Überwachen der aggregierten Anwendungs-Metadaten oder der aggregierten Sensordaten; und
Extrahieren, unter Verwendung des Filters, der angeforderten Daten aus den aggregierten Anwendungs-Metadaten oder den aggregierten Sensordaten.

4. System nach Anspruch 2 oder 3, wobei:
Der Protokollspeicher (316) ferner konfiguriert ist, die serialisierten Anwendungs-Metadaten oder die serialisierten Sensordaten in einem Ringpuffer zu speichern; und
der Speicher (318), in dem die angeforderten Daten gespeichert werden, von dem Ringpuffer des Protokolliersystems (304) getrennt ist.

5. System nach Anspruch 2 oder 3, wobei:
Der Protokollspeicher (316) ferner konfiguriert ist, die serialisierten Anwendungs-Metadaten oder die serialisierten Sensordaten in einem Ringpuffer zu speichern; und
der Speicher (318), in dem die angeforderten Daten gespeichert werden, der Ringpuffer oder ein sekundärer Ringpuffer des Protokolliersystems (304) ist.

6. System nach einem der vorhergehenden Ansprüche, wobei die eine oder die mehreren Bedingungen mindestens ein Fahrszenario, einen Standort oder eine Quellenanwendung beinhalten.

7. System nach einem der vorhergehenden Ansprüche, wobei die Datenabfrage (320) eine Hintergrundanwendung beinhaltet, die eine neue oder aktualisierte Version einer ersten Anwendung (310-1) der einen oder mehreren Anwendungen (310) ist, die Hintergrundanwendung ist für Folgendes konfiguriert:
Ausführen von Berechnungen unter Verwendung der angeforderten Daten; und
Speichern der Berechnungen und der angeforderten Daten, wenn Leistungsbedingungen der Hintergrundanwendung nicht erfüllt sind, die Leistungsbedingungen umfassen einen Vergleich zwischen einer Ausgangsleistung der ersten Anwendung und einer Ausgangsleistung der neuen oder aktualisierten Version der ersten Anwendung (310-1).

8. System nach einem der vorhergehenden Ansprüche, wobei der Datenabfrage-Daemon (302) ferner konfiguriert ist, eine zweite Datenabfrage von dem Remote-Datenabfragesystem (108) zu empfangen, die zweite Datenabfrage umfasst dabei eine zweite Anforderung von Daten, die eine oder mehrere zusätzliche Bedingungen erfüllen und an eine zweite Fahrzeugflotte, die das Hostfahrzeug beinhaltet, gerichtet sind, die zweite Fahrzeugflotte unterscheidet sich von der Fahrzeugflotte (104).

9. System nach einem der vorhergehenden Ansprüche, wobei der Datenabfrage-Daemon (302) ferner konfiguriert ist, die angeforderten Daten an das Remote-Datenabfragesystem (108) zu übermitteln, während das Hostfahrzeug (102-1) mit einem drahtlosen lokalen Netzwerk verbunden ist.

10. System nach einem der vorhergehenden Ansprüche, wobei das System ferner eine Benutzeranwendung (308) umfasst, die betriebsbereit mit dem Datenabfrage-Daemon (302) verbunden und konfiguriert ist, eine Genehmigung von einem Benutzer des Hostfahrzeugs (102-1) für den Datenabfrage-Daemon (302) einzuholen, um die angeforderten Daten zu speichern und zu übertragen.

11. System nach Anspruch 10, wobei die Benutzeranwendung (308) ferner für:
Folgendes konfiguriert ist: Anzeigen von Informationen in Bezug auf die Datenabfrage (320) an den Benutzer, einschließlich mindestens eines Standorts oder eines Fahrszenarios in Verbindung mit der Datenabfrage (320);
Anzeige einer Belohnung für das Erfüllen der Datenabfrage (320) an den Benutzer, die Belohnung beinhaltet mindestens einen Geldbetrag, eine reduzierte oder gestrichene Gebühr für eine oder mehrere Funktionen, oder eine Aktualisierung einer Karten-Datenbank oder der einen oder mehreren Funktionen; und
Empfangen einer Eingangsleistung von dem Benutzer, der die Genehmigung zum Abschließen der Datenabfrage (320) gibt.

12. System nach Anspruch 10 oder 11, wobei die Benutzeranwendung (308) darüber hinaus für Folgendes konfiguriert ist:
Anzeigen von Informationen in Bezug auf mehrfache Datenabfragen (320); und
Empfangen einer Eingangsleistung von dem Benutzer, der die Genehmigung zum Abschließen einer oder mehrerer der mehrfachen Datenabfragen (320) gibt.

13. System nach einem der Ansprüche 10 bis 12, wobei die Benutzeranwendung (308) ferner konfiguriert ist, die eine oder mehreren Bedingungen der Datenabfrage (320) an ein Navigationssystem des Hostfahrzeugs weiterzugeben, das Navigationssystem ist dabei konfiguriert, eine Strecke auszuwählen, die die eine oder mehreren Bedingungen unter der einen oder den mehreren verfügbaren Strecken erfüllt.

14. System nach einem der vorhergehenden Ansprüche, wobei das Remote-Datenabfragesystem (108) eine Remote-Datenabfrageanwendung (206) umfasst, die von einem Remote-Computersystem ausgeführt wird.

15. System nach einem der vorhergehenden Ansprüche, wobei das System ferner einen Prozessor umfasst, der konfiguriert ist, den Datenabfrage-Daemon (302) auszuführen, um auf die Datenabfrage (320) zu antworten, wenn das Hostfahrzeug (102-1) auf einer Fahrspur einer Fahrbahn unterwegs ist.

## Revendications

1. Système d'un véhicule hôte comprenant :
un système de journalisation (304) connecté de manière fonctionnelle à une ou plusieurs applications (310) du véhicule hôte (102-1) et configuré pour journaliser les métadonnées de l'application ou les données de capteur associées à la ou aux applications (310) ;
un démon de requête de données (302) connecté de manière fonctionnelle au système de journalisation (304) et configuré pour :
recevoir une requête de données (320) provenant d'un système de requête de données distant (108), la requête de données (320) comprenant une demande de données satisfaisant à une ou plusieurs conditions et ayant pour objet un parc de véhicules (104) comprenant le véhicule hôte (102-1) ;
détecter les données demandées dans la requête de données (320) dans les métadonnées de l'application ou les données de capteur journalisées par le système de journalisation (304) ;
extraire et mémoriser les données demandées dans la mémoire (318) ; et
transmettre les données demandées au système de requête de données distant (108) pour répondre à la requête de données (320).

2. Système selon la revendication 1, dans lequel le système de journalisation (304) comprend ;
un serveur de journalisation (312) connecté de manière fonctionnelle à la ou aux applications (310) et configuré pour agréger les métadonnées de l'application ou les données de capteur associées à la ou aux applications (310) ;
un sérialiseur de journalisation (314) connecté de manière fonctionnelle au serveur de journalisation (312) et au démon de requête de données (302), le sérialiseur de journalisation (314) étant configuré pour sérialiser les métadonnées d'application agrégées ou les données de capteur agrégées ; et
une mémoire de journalisation (316) fonctionnellement connectée au sérialiseur de journalisation (314) et configurée pour mémoriser les métadonnées d'application sérialisées ou les données de capteur sérialisées.

3. Système selon la revendication 2, dans lequel le démon de requête de données (302) est configuré pour détecter les données demandées de la requête de données (320) dans les métadonnées de l'application ou les données de capteur étant journalisées par le système de journalisation (304) en :
construisant un filtre basé sur les données demandées ;
surveillant les métadonnées d'application agrégées ou les données de capteur agrégées ; et
extrayant, à l'aide du filtre, les données demandées provenant des métadonnées d'application agrégées ou des données de capteur agrégées.

4. Système selon la revendication 2 ou 3, dans lequel :
la mémoire de journalisation (316) est en outre configurée pour mémoriser les métadonnées d'application sérialisées ou les données de capteur sérialisées dans une mémoire tampon circulaire ; et
la mémoire (318) dans laquelle les données demandées sont mémorisées est distincte de la mémoire tampon circulaire du système de journalisation (304).

5. Système selon la revendication 2 ou 3, dans lequel :
la mémoire de journalisation (316) est en outre configurée pour mémoriser les métadonnées d'application sérialisées ou les données de capteur sérialisées dans une mémoire tampon circulaire ; et
la mémoire (318) dans laquelle les données demandées sont mémorisées est la mémoire tampon circulaire ou une mémoire tampon circulaire secondaire du système de journalisation (304).

6. Système selon l'une quelconque des revendications précédentes, dans lequel la ou les conditions comportent au moins un scénario de conduite, une localisation et/ou une application source.

7. Système selon l'une quelconque des revendications précédentes, dans lequel la requête de données (320) comporte une application d'arrière-plan qui est une version nouvelle ou mise à jour d'une première application (310-1) de la ou des applications (310), l'application d'arrière-plan est configurée pour :
effectuer des calculs à l'aide des données demandées ; et
mémoriser les calculs et les données demandées si les conditions de performance de l'application d'arrière-plan ne sont pas satisfaites, les conditions de performance comprenant une comparaison entre une sortie de la première application et une sortie de la version nouvelle ou mise à jour de la première application (310-1).

8. Système selon l'une quelconque des revendications précédentes, dans lequel le démon de requête de données (302) est en outre configuré pour recevoir une seconde requête de données provenant du système de requête de données distant (108), la seconde requête de données comprenant une seconde requête de données satisfaisant à une ou plusieurs conditions supplémentaires et ayant pour objet un second parc de véhicules comprenant le véhicule hôte, le second parc de véhicules étant différent du parc de véhicules (104).

9. Système selon l'une quelconque des revendications précédentes, dans lequel le démon de requête de données (302) est en outre configuré pour transmettre les données demandées au système de requête de données distant (108) lorsque le véhicule hôte (102-1) se connecte à un réseau local sans fil.

10. Système selon l'une quelconque des revendications précédentes, dans lequel le système comprend en outre une application utilisateur (308) connectée de manière fonctionnelle au démon de requête de données (302) et configurée pour demander à un utilisateur du véhicule hôte (102-1) la permission au démon de requête de données (302) de mémoriser et de transmettre les données demandées.

11. Système selon la revendication 10, dans lequel l'application utilisateur (308) est en outre configurée pour :
afficher des informations relatives à la requête de données (320) à l'utilisateur, comportant au moins une localisation et/ou un scénario de conduite associé à la demande de données (320) ;
afficher une récompense pour l'achèvement de la requête de données (320) à l'utilisateur, la récompense comportant au moins un montant monétaire, une réduction et/ou une suppression des frais pour la ou les caractéristiques, ou une mise à jour d'une base de données cartographiques ou la ou les caractéristiques ; et
recevoir une entrée provenant de l'utilisateur donnant la permission de compléter la requête de données (320).

12. Système selon la revendication 10 ou 11, dans lequel l'application utilisateur (308) est en outre configurée pour :
afficher des informations relatives à des requêtes de données multiples (320) ; et
recevoir une entrée provenant de l'utilisateur donnant la permission de compléter une ou plusieurs parmi les requêtes de données multiples (320).

13. Système selon l'une quelconque des revendications 10 à 12, dans lequel l'application utilisateur (308) est en outre configurée pour passer la ou les conditions de la requête de données (320) à un système de navigation du véhicule hôte, le système de navigation étant configuré pour sélectionner un itinéraire qui satisfait à la ou aux conditions parmi un ou plusieurs itinéraires disponibles.

14. Système selon l'une quelconque des revendications précédentes, dans lequel le système de requête de données distant (108) comprend une application de requête de données distant (206) exécutée par un système informatique distant.

15. Système selon l'une quelconque des revendications précédentes, dans lequel le système comprend en outre un processeur configuré pour exécuter le démon de requête de données (302) afin de répondre à la requête de données (320) lorsque le véhicule hôte (102-1) circule dans une voie de circulation sur une route.
